# EUROPEAN PATENT APPLICATION

(11) **EP 3 057 287 A1**
(43) Date of publication of application: **17.08.2016**
(21) Application number: 14791409.7
(22) Date of filing: 18.04.2014
(51) Int. Cl.: H04L 29/08

(54) **NODE ALLOCATION METHOD, DEVICE AND SYSTEM**

(30) Priority: 11.10.2013 CN 201310472792
(71) Applicant: ZTE Corporation, Guangdong Province 518057 (CN)
(72) Inventor: DONG, Xirong, Shenzhen Guangdong Province 518057 (CN)
(74) Representative: Novagraaf Technologies
(86) International application number: PCT/CN2014/075737
(87) International publication number: WO 2014/176990

(57) **Abstract**

Provided are a method, device and system for allocating a node. According to the method, at least one first report message of multiple nodes is received, wherein the at least one first report message carries performance parameters of the multiple nodes and parameters for indicating Virtual Content Delivery Network (VCDN) resource consumption of the multiple nodes; an optimal node with optimal performance in the multiple nodes is determined according to the at least one first report message; and information of the optimal node is sent to User Equipment (UE). By the technical solution, a problem caused by incapability in reasonably allocating VCDN resources is solved, and stability and quality of service of the system are improved.

## Description

### Technical Field

The present disclosure relates to the field of communication, and in particular to a method, device and system for allocating a node.

### Background

Increase of a network bandwidth and development of a Third Generation (3G) wireless communication technology have made it possible to develop a media-content-based value added service in a telecommunication network. A streaming media technology provides a manner of transmitting a media content such as a video, an audio and a picture in a network, which makes the streaming media technology more widely applied in a multimedia service system, particularly in a mobile multimedia service. In addition, along with development of a telecommunication network technology, developing a multimedia service such as Internet Protocol Television (IPTV), video monitoring, mobile TV and downloading for a mobile phone in a telecommunication network has gradually become a tendency.

By a multi-operator solution provided for a system by a Virtual Content Delivery Network (VCDN), multimedia services such as IPTV may be diversified and differentiated to distinguish different consumer groups on the same platform foundation. A conventional VCDN technical solution only integrates and classifies content providers or service providers according to different requirements, but there is no fine distinction in respect of resource control. For example, resource management and resource allocation required by different providers under the same VCDN are unclear and uncontrolled, which is not favorable for network management analysis and overall planning after the data analysis.

For a problem caused by incapability in reasonably allocating VCDN resources in a related technology, there is yet no effective solution.

### Summary

The embodiments of the present disclosure provide a method, device and system for allocating a node, so as to solve the above-mentioned problem.

According to one aspect of the embodiments of the present disclosure, a method for allocating a node is provided, which may include that: at least one first report message of multiple nodes is received, wherein the at least one first report message carries performance parameters of the multiple nodes and parameters for indicating VCDN resource consumption of the multiple nodes; an optimal node with optimal performance in the multiple nodes is determined according to the at least one first report message; and information of the optimal node is sent to User Equipment (UE).

In an example embodiment, the information of the optimal node may include at least one of: address information of an agent server corresponding to the optimal node and address information of a media server in the optimal node.

In an example embodiment, after the step that the information of the optimal node is sent to the UE, the method may further include that: the UE sends a first service request to the agent server according to the address information of the agent server corresponding to the optimal node.

In an example embodiment, the method may further include that: the agent server receives at least one second report message of multiple media servers, wherein the at least one second report message carries parameters for indicating VCDN resource consumption of the multiple media servers; an optimal media server with a lightest load in the multiple media servers is determined according to the at least one second report message; and information of the optimal media server is sent to the UE under a condition that the UE sends the first service request to the agent server.

In an example embodiment, after the step that the information of the optimal media server is sent to the UE, the method may further include that: the UE sends a second service request to the optimal media server according to the information of the optimal media server.

According to another aspect of the embodiments of the present disclosure, a device for allocating a node is further provided, which may include: a receiving component, configured to receive at least one first report message of multiple nodes, wherein the at least one first report message carries performance parameters of the multiple nodes and parameters for indicating VCDN resource consumption of the multiple nodes; a determination component, configured to determine an optimal node with optimal performance in the multiple nodes according to the at least one first report message; and a sending component, configured to send information of the optimal node to UE.

In an example embodiment, the information, sent by the sending component, of the optimal node may include at least one of: address information of an agent server corresponding to the optimal node and address information of a media server in the optimal node.

According to another aspect of the embodiments of the present disclosure, a system for allocating a node is provided, which may include: the abovementioned device for allocating the node, UE, an agent server and multiple media servers, wherein
the UE may be coupled with the device for allocating the node, and may be configured to send a first service request to the agent server according to address information of the agent server carried in the information of the optimal node, and send a second service request to an optimal media server according to information of the optimal media server;
the agent server may be coupled with the device for allocating the node and the multiple media servers, and may be configured to receive at least one second report message of the multiple media servers, determine an optimal media server with a lightest load in the multiple media servers according to the at least one second report message, and send the information of the optimal media server to the UE under a condition that the UE sends the first service request to the agent server, wherein the at least one second report message carries parameters for indicating VCDN resource consumption of the multiple media servers; and
the multiple media servers may be configured to provide a service for the UE.

In an example embodiment, the agent server may include: an access gateway, coupled with the device for allocating the node and the multiple media servers and configured to receive the at least one second report message from the multiple media servers, determine the first report message according to the at least one second report message and send the first report message to the device for allocating the node.

In an example embodiment, the agent server may further include: a load balance unit, coupled with the access gateway and the multiple media servers and configured to determine the optimal media server according to the at least one second report message and the first service request sent by the UE and send the information of the optimal media server to the UE.

According to the embodiments of the present disclosure, at least one first report message of multiple nodes is received, wherein the at least one first report message carries a performance parameter of the node and a parameter for indicating VCDN resource consumption of the node; an optimal node with optimal performance in the multiple nodes is determined according to the at least one first report message; and the information of the optimal node is sent to the UE, so that a problem caused by incapability in reasonably allocating VCDN resources is solved, and stability and quality of service of the system are improved.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for allocating a node according to an embodiment of the present disclosure;
Fig. 2 is a structure diagram of a device for allocating a node according to an embodiment of the present disclosure;
Fig. 3 is a structure diagram of a system for allocating a node according to an embodiment of the present disclosure;
Fig. 4 is a first example structure diagram of a system for allocating a node according to an embodiment of the present disclosure;
Fig. 5 is a second example structure diagram of a system for allocating a node according to an embodiment of the present disclosure;
Fig. 6 is a structure diagram of a video on demand service system of a set-top box according to an example embodiment of the present disclosure;
Fig. 7 is a flowchart of reporting performance of streaming media servers in video on demand service of a set-top box according to an example embodiment of the present disclosure; and
Fig. 8 is a schematic diagram of video on demand flow of a user in video on demand service of a set-top box according to an example embodiment of the present disclosure.

### Detailed Description of the Embodiments

It is important to note that embodiments in the present disclosure and characteristics in the embodiments may be combined under the condition of no conflicts. The present disclosure will be described below with reference to the drawings and the embodiments in detail.

Steps shown in the flowcharts of the drawings may be executed in a computer system, such as a set of computers, capable of executing instructions, and moreover, although logic sequences are shown in the flowcharts, the shown or described steps may be executed in sequences different from the sequences described here under some circumstances.

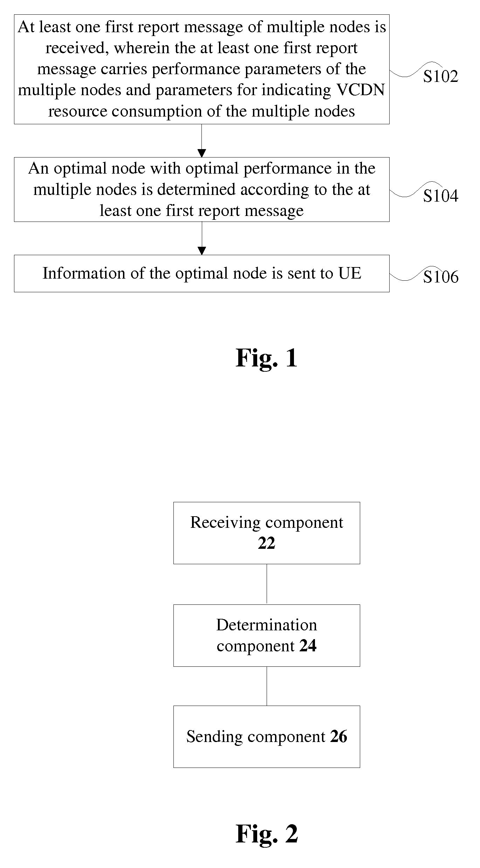

The embodiment provides a method for allocating a node. Fig. 1 is a flowchart of a method for allocating a node according to an embodiment of the present disclosure, and as shown in Fig. 1, the flow includes the following steps:
Step S102: at least one first report message of multiple nodes is received, wherein the at least one first report message carries performance parameters of the multiple nodes and parameters for indicating VCDN resource consumption of the multiple nodes;
Step S104: an optimal node with optimal performance in the multiple nodes is determined according to the at least one first report message; and
Step S106: information of the optimal node is sent to UE.

In this embodiment, the at least one first report message may include messages respectively received from the multiple nodes, that is, one first report message contains related parameter information of one node; and alternatively, a first report message may contain related parameter information of multiple nodes.

By the steps, the node with the optimal performance in the multiple nodes is determined according to the parameters for indicating the VCDN resource consumption of the nodes and the performance parameters reported by the nodes, and the information of the node with the optimal performance is sent to the UE, so that the UE can access the node according to the information of the optimal node to further implement VCDN resource allocation. Compared with a manner incapable of reasonably allocating and managing resources of the same VCDN platform in the related technology, the method for allocating the node provided by the embodiment has the advantage that a problem caused by incapability in reasonably allocating VCDN resources is solved, and stability and quality of service of a system are improved.

It is important to note that the VCDN resources may include resources provided by one or more same or different content providers and service providers.

In an example embodiment, the parameters for indicating the VCDN resource consumption of the nodes may be: parameters for indicating total VCDN resource consumption of all equipment in each of the multiple nodes, and may also be parameters for indicating VCDN resource consumption of each piece of equipment (such as each media server) in each of the multiple nodes.

In an example embodiment, the node may include an agent server corresponding to the node and multiple media servers managed by the agent server. In an example embodiment, the information of the optimal node may include at least one of: address information of an agent server corresponding to the optimal node and address information of a media server in the optimal node. For example, the information of the optimal node is the address information of the agent server in the node, then the UE may make a request to the agent server for service after receiving the address information of the agent server, and the agent server provides the requested service for the UE through a certain media server in multiple media servers which are managed. For another example, the information of the optimal node is address information of a certain media server in the optimal node, and then the UE may directly make a request to the media server for service after receiving the address information of the media server.

In an example embodiment, after the UE receives the information of the optimal node, the UE may send a first service request to the agent server according to the address information, which is carried in the information, of the agent server corresponding to the optimal node. The agent server may select a certain media server in the multiple media servers which are managed to provide the corresponding service for the UE according to the first service request.

In an example embodiment, after the agent server receives the first service request, load balance processing may further be performed. For example, the agent server receives at least one second report message of multiple media servers, wherein the at least one second report message carries parameters for indicating VCDN resource consumption of the multiple media servers which are managed; and the agent server acquires load conditions of the multiple media servers according to the VCDN resource consumption of the multiple media servers which are managed, and determines the media server with a lightest load as an optimal media server, and the optimal media server provides the corresponding service for the UE after the agent server receives the first service request sent by the UE. For example, under a condition that the UE sends the first service request to the agent server, the agent server sends information of the determined optimal media server to the UE for the UE to initiate a service request and service interaction to the optimal media server.

In an example embodiment, after the UE receives the information of the optimal media server from the agent server, the UE may send a second service request to the optimal media server to request for corresponding service according to the information, such as the address information, of the optimal media server. In an example embodiment, under a condition that the information of the optimal node includes the address information of the media server in the optimal node, the UE may also send the second service request to the optimal media server according to identification information, received from the agent server, of the optimal media server and the address information of the media server corresponding to the identification information.

The example embodiment further provides a device for allocating a node, which is configured to implement the abovementioned method for allocating the node. A specific implementation process of the device described in the device embodiment has been described in detail in the method embodiment, and will not be elaborated herein.

Fig. 2 is a structure diagram of a device for allocating a node according to an embodiment of the present disclosure. As shown in Fig. 2, the device includes: a receiving component 22, a determination component 24 and a sending component 26, wherein the receiving component 22 is configured to receive at least one first report message of multiple nodes, wherein the at least one first report message carries performance parameters of the multiple nodes and parameters for indicating VCDN resource consumption of the multiple nodes; the determination component 24 is coupled to the receiving component 22, and is configured to determine an optimal node with optimal performance in the multiple nodes according to the at least one first report message; and the sending component 26 is coupled to the determination component 24, and is configured to send information of the optimal node to UE.

The components and units involved in the embodiment of the present disclosure may be implemented in a software manner, and may also be implemented in a hardware manner. The components and units described in the embodiments may also be arranged in a processor, and for example, it may be described as follows: a processor includes a receiving component 22, a determination component 24 and a sending component 26. It should be noted that names of these components may not form limits to the components under certain conditions, and for example, the receiving component may also be described as "a component configured to receive at least one first report message of multiple nodes".

In an example embodiment, information, sent by the sending component 26, of the optimal node may include at least one of: address information of an agent server corresponding to the optimal node and address information of a media server in the optimal node.

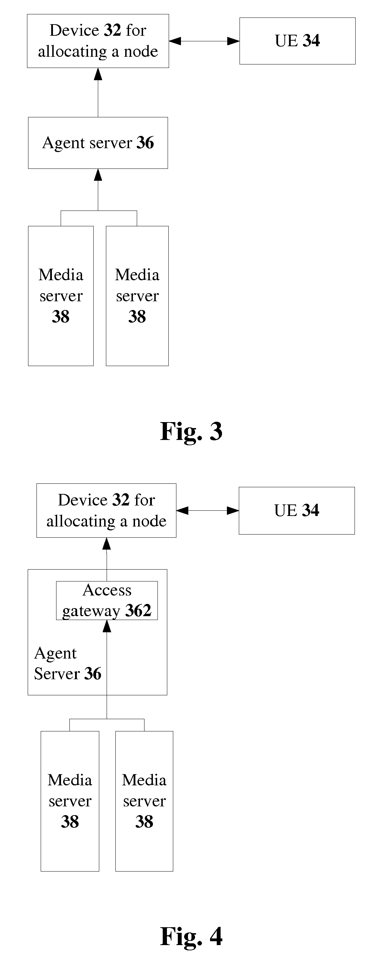

The embodiment further provides a system for allocating a node. Fig. 3 is a structure diagram of a system for allocating a node according to an embodiment of the present disclosure. As shown in Fig. 3, the system includes: the abovementioned device 32 for allocating the node, UE 34, an agent server 36 and multiple media servers 38.

The UE 34 is coupled with the device 32 for allocating the node, and is configured to send a first service request to the agent server 36 according to address information of the agent server 36 carried in the information of the optimal node, and send a second service request to an optimal media server according to information of the optimal media server.

The agent server 36 is coupled with the device 32 for allocating the node and the multiple media servers 38, and is configured to receive at least one second report message of the multiple media servers 38, determine the optimal media server with a lightest load in the multiple media servers 38 according to the at least one second report message, and send the information of the optimal media server to the UE 34 under a condition that the UE sends the first service request to the agent server 36, wherein the at least one second report message carries parameters for indicating VCDN resource consumption of the multiple media servers 38.

The multiple media servers 38 are configured to provide a service for the UE 34.

Fig. 4 is a first example structure diagram of a system for allocating a node according to an embodiment of the present disclosure. As shown in Fig. 4, as an example embodiment, the agent server 36 may include: an access gateway 362, coupled with the device 32 for allocating the node and the multiple media servers 38 and configured to receive the at least one second report message from the multiple media servers 38, determine the first report message according to the at least one second report message and send the first report message to the device 32 for allocating the node.

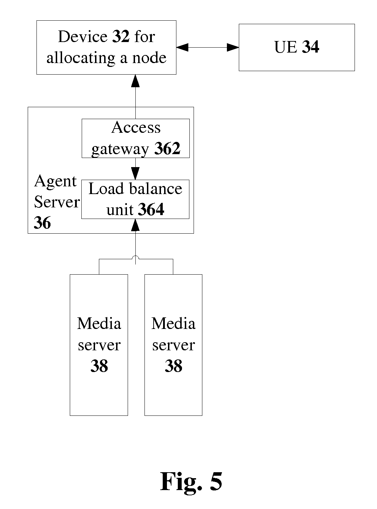

Fig. 5 is a second example structure diagram of a system for allocating a node according to an embodiment of the present disclosure. As shown in Fig. 5, as an example embodiment, the agent server 36 may further include: a load balance unit 364, coupled with the access gateway 362 and the multiple media servers 38 and configured to determine the optimal media server according to the at least one second report message sent by the multiple media servers 38 and the first service request sent by the UE 34 and send the information of the optimal media server to the UE 34, wherein the access gateway 362 is further configured to send the first service request to the load balance unit 364.

Description and introduction will be made below with reference to an example embodiment.

The example embodiment provides a VCDN resource fine control-based service system and method, and the system and the method relate to a multimedia service, such as IPTV, video monitoring, mobile streaming media system and downloading for a mobile phone, in a telecommunication network.

The VCDN resource fine control-based service system provided by the example embodiment includes: a provider component, a management component, a global redirection component (equivalent to the abovementioned device 32 for allocating the node), an agent component (equivalent to the abovementioned agent server 36) and media service components (equivalent to the abovementioned media servers 38).

The provider component includes content providers or service providers.

The management component is configured to provide functions of VCDN storage, VCDN bandwidth control, content management, node management and the like, and is responsible for synchronizing a storage space upper limit and bandwidth upper limit of a VCDN to the global redirection component and receiving and updating storage space and bandwidth states, reported by the global redirection component, of the VCDN.

The global redirection component is configured to provide a user global redirection function to redirect a user to a node, with optimal performance, of the VCDN, receive VCDN bandwidths and space conditions reported by the agent component and used by different providers, and summarize and report a space and bandwidth using condition of the VCDN to the management component.

The agent component is configured to perform access control on UE component in the system, and is also configured to receive a service redirection request of the UE component, and allocate a media service component to the UE component according to VCDN resource capabilities reported by the media service components.

The media service components are configured to provide a service access function for the UE component, receive a service request of the UE component, provide a service for the UE component, and report VCDN space and bandwidth using conditions of different providers to the agent component.

The UE component is configured to send a media redirection request to the global redirection component, and after acquiring information of the media service component allocated by the agent component, send a media service request to the media service component, and receive a code stream sent by the media service component.

The VCDN resource fine control-based service method provided by the example embodiment includes the following steps:
Step 1: all the media service components in the system periodically report VCDN resource capabilities of different providers to the agent component;
Step 2: the agent component acquires media performance parameters reported by all the media service components, and the agent component summarizes a VCDN space and bandwidth using condition of the corresponding node;
Step 3: the agent component reports the VCDN resource capabilities to the global redirection component, wherein the VCDN resource capabilities are used for indicating current VCDN resource consumption of each node to the global redirection component as a basis for global redirection and reasonable allocation of the nodes;
Step 4: the global redirection component acquires all VCDN resource information reported by the agent components;
Step 5: the global redirection component locally synchronizes a VCDN resource maximum capability during starting;
Step 6: the global redirection component waits for starting receiving a redirection request of the user;
Step 7: all the media service components in the system wait for receiving a media service request of the user;
Step 8: the UE component sends the service redirection request to the global redirection component;
Step 9: the global redirection component selects the media service component with optimal performance in the node with an optimal VCDN resource according to VCDN resource capability using parameters of all the nodes in the current system;
Step 10: the UE component receives a redirection response returned by the global redirection component, and acquires information of the media service component in the redirection response;
   the UE component sends the media service request to the media service component, performs message interaction with the media service component and establishes a communication link and a control session;
Step 11: the UE component receives a code stream sent by the media service component, and the UE component processes and displays the code stream as different media services; and
Step 12: the UE component sends a media service ending request to the media service component, interacts with the media service component and terminates the communication link and the control session.

According to the multimedia service system provided by the solution of the example embodiment, the global redirection component redirects the user to the node with the optimal resource capability according to the VCDN resource utilization condition reported by the agent component in a core network plane, and performs optimal resource allocation and control on different VCDN storage spaces and bandwidths, thereby effectively controlling and managing diversified and differentiated service VCDN resources.

The example embodiment will be described and introduced below with reference to the drawings.

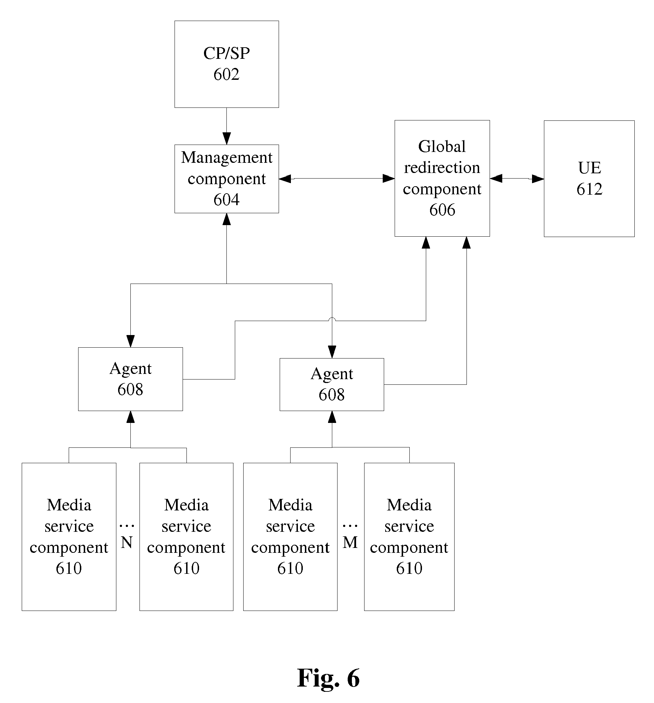

Fig. 6 is a structure diagram of a video on demand service system of a set-top box according to an example embodiment of the present disclosure. The system, as shown in Fig. 6, includes: a provider component 602, a management component 604, a global redirection component 606, an agent component 608, media service components 610 and a UE component 612. A connection relationship among these components is shown in Fig. 6.

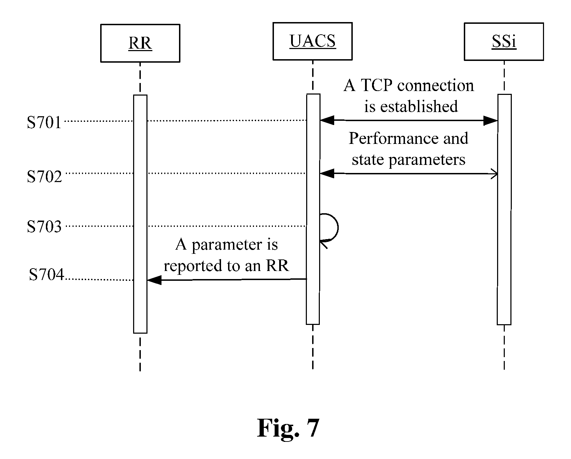

Fig. 7 is a flowchart of reporting performance of streaming media servers (i.e. media servers) in video on demand service of a set-top box according to an example embodiment of the present disclosure. As shown in Fig. 7, the flow includes the following steps:
Step S701: performance reporting components of all the streaming media servers SS1, SS2 and SS3 establish communication links with an agent server (UACS) for performance acquisition;
Step S702: all the streaming media servers SS1, SS2 and SS3 periodically send performance parameters C1, C2 and C3 of the streaming media servers and information, such as IP addresses and VCDN storage spaces and bandwidths used by Real Time Streaming Protocol (RTSP) listening ports and different providers, needed for media service provision of the current streaming media servers to the agent server;
Step S703: the agent server receives the performance parameters of each streaming media server, stores the performance parameters of each streaming media server SS1, SS2 and SS3 and reports the performance parameters to the global redirection component according to a current storage space and bandwidth summary of a VCDN where the providers are located; and
Step S704: the global redirection component receives and locally stores the performance and VCDN resource capability parameters reported by the agent component as bases for subsequent selection (for example, Step S805) of a node with an optimal VCDN resource capability.

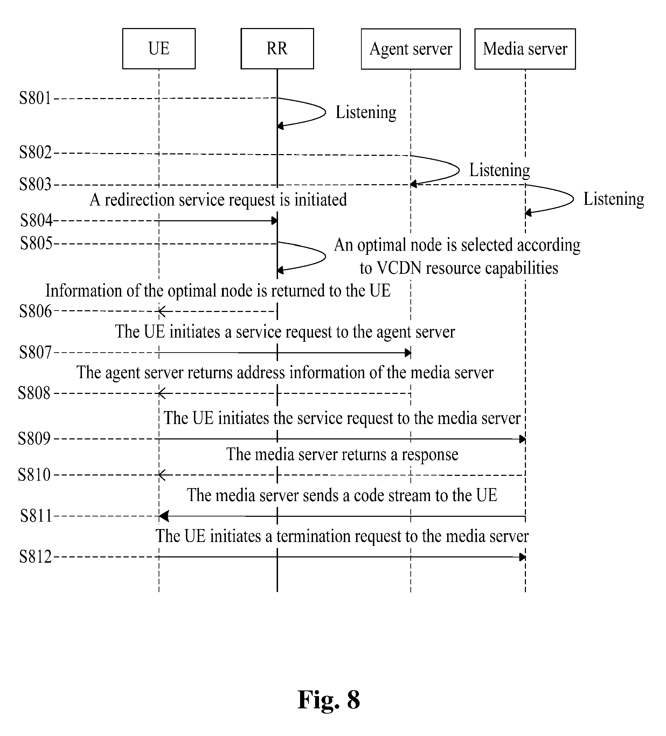

Fig. 8 is a schematic diagram of video on demand flow of a user in video on demand service of a set-top box according to an example embodiment of the present disclosure. As shown in Fig. 8, the flow includes the following steps:
Step S801: a global redirection server starts listening;
Step S802: an agent server starts listening;
Step S803: media servers start listening;
Step S804: UE initiates a redirection service request to the global redirection server;
Step S805: the global redirection server receives the request of the UE, and selects an optimal node according to performance parameters of the nodes and the VCDN resource capability parameters which are stored in Step S704;
Step S806: the global redirection server returns information of the optimal agent server to the UE;
Step S807: the UE initiates a service request to the agent server;
Step S808: the agent server receives the request of the UE, selects a media server with a lightest load, and returns information of the media server to the UE;
Step S809: the UE initiates a service request to the media server;
Step S810: the media server returns a service request response to the UE;
Step S811: the media server sends a code stream to the UE; and
Step S812: the UE initiates a service termination request, and the service is terminated.

In the example embodiment, the global redirection server (i.e. RR) provides a global redirection function, and is responsible for receiving the performance of the nodes and the VCDN resource capabilities reported by the agent server, and redirecting the UE to the optimal node according to reported VCDN resource information. During a practical application, different providers may belong to the same VCDN, also the same platform may have different VCDNs.

In an example embodiment, the agent server receives and processes performance report messages of the streaming media servers, and may also provide load balance service. For example, the agent server may be divided into two components for independent deployment, one serving as a load balance server of streaming media and the other serving as a user access gateway, the UE may interact with the user access gateway only, and a media redirection message (i.e. a service request message sent by a user) is forwarded to the load balance server of the streaming media through the user access gateway. Improvements and modifications may improve practicability of the present disclosure, but also fall within the scope of protection of the present disclosure.

In an example embodiment, the media servers may be configured to be responsible for reporting performance information and VCDN resource information used by different providers to the agent server.

In an example embodiment, a protocol for media signaling interaction between the UE and the agent server and between the UE and the streaming media servers may be RTSP, i.e. an Internet Engineering Task Force (IETF) standard protocol. It is important to note that different media interaction protocols may be adopted during specific implementation, and there are no limits made in the example embodiment.

It is important to note that the VCDN resource fine control-based service method disclosed in the example embodiment may be extended to the other fields of services.

It can be concluded that, by the abovementioned embodiments and example embodiments, a multi-operator solution is provided for a CDN system, management and allocation may also be performed on different VCDN resources according to content providers or service providers, and resources may be reasonably allocated to provide service for a user according to an available space, concurrence and bandwidth upper limit of a VCDN. That is, diversified and differentiated service is implemented by virtue of the same VCDN platform, and resources may be reasonably allocated for the diversified and differentiated service at the same time to implement manageability and controllability of the resources.

### Industrial Applicability

According to the embodiments of the present disclosure, a node with an optimal performance in multiple nodes is determined according to the parameters for indicating the VCDN resource consumption of the nodes and the performance parameters reported by the nodes, and the information of the node with the optimal performance is sent to the UE, so that the UE can access the node according to the information of the optimal node to further implement VCDN resource allocation. Compared with the manner incapable of reasonably allocating and managing resources of the same VCDN platform in the related technology, the method for allocating a node provided by the embodiments has the advantage that the problem caused by incapability in reasonably allocating the VCDN resources is solved, and stability and quality of service of the system are improved.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein can form a single integrated circuit component for implementation. As a consequence, the present disclosure is not limited to any specific hardware and software combination.

The above is only the example embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection defined by the appended claims of the present disclosure.

## Claims

1. A method for allocating a node, comprising:
receiving at least one first report message of multiple nodes, wherein the at least one first report message carries performance parameters of the multiple nodes and parameters for indicating Virtual Content Delivery Network, VCDN, resource consumption of the multiple nodes;
determining an optimal node with optimal performance in the multiple nodes according to the at least one first report message; and
sending information of the optimal node to User Equipment, UE.

2. The method as claimed in claim 1, wherein the information of the optimal node comprises at least one of: address information of an agent server corresponding to the optimal node and address information of a media server in the optimal node.

3. The method as claimed in claim 2, after sending the information of the optimal node to the UE, further comprising:
sending, by the UE, a first service request to the agent server according to the address information of the agent server corresponding to the optimal node.

4. The method as claimed in claim 3, further comprising:
receiving, by the agent server, at least one second report message of multiple media servers, wherein the at least one second report message carries parameters for indicating VCDN resource consumption of the multiple media servers;
determining an optimal media server with a lightest load in the multiple media servers according to the at least one second report message; and
sending information of the optimal media server to the UE under a condition that the UE sends the first service request to the agent server.

5. The method as claimed in claim 4, after sending the information of the optimal media server to the UE, further comprising:
sending, by the UE, a second service request to the optimal media server according to the information of the optimal media server.

6. A device for allocating a node, comprising:
a receiving component, configured to receive at least one first report message of multiple nodes, wherein the at least one first report message carries performance parameters of the multiple nodes and parameters for indicating Virtual Content Delivery Network, VCDN, resource consumption of the multiple nodes;
a determination component, configured to determine an optimal node with optimal performance in the multiple nodes according to the at least one first report message; and
a sending component, configured to send information of the optimal node to User Equipment, UE.

7. The device as claimed in claim 6, wherein the information, sent by the sending component, of the optimal node comprises at least one of: address information of an agent server corresponding to the optimal node and address information of a media server in the optimal node.

8. A system for allocating a node, comprising: the device for allocating the node as claimed in claim 6 or 7, User Equipment, UE, an agent server and multiple media servers, wherein
the UE is coupled with the device for allocating the node, and is configured to send a first service request to the agent server according to address information of the agent server carried in the information of the optimal node, and send a second service request to an optimal media server according to information of the optimal media server;
the agent server is coupled with the device for allocating the node and the multiple media servers, and is configured to receive at least one second report message of the multiple media servers, determine an optimal media server with a lightest load in the multiple media servers according to the at least one second report message, and send information of the optimal media server to the UE under a condition that the UE sends the first service request to the agent server, wherein the at least one second report message carries parameters for indicating Virtual Content Delivery Network, VCDN, resource consumption of the multiple media servers; and
the multiple media servers are configured to provide a service for the UE.

9. The system as claimed in claim 8, wherein the agent server comprises:
an access gateway, coupled with the device for allocating the node and the multiple media servers and configured to receive the at least one second report message from the multiple media servers, determine the first report message according to the at least one second report message and send the first report message to the device for allocating the node.

10. The system as claimed in claim 9, wherein the agent server further comprises:
a load balance unit, coupled with the access gateway and the multiple media servers and configured to determine the optimal media server according to the at least one second report message and the first service request sent by the UE and send the information of the optimal media server to the UE.
